# EUROPEAN PATENT APPLICATION

(11) **EP 2 211 345 A1**
(43) Date of publication of application: **28.07.2010**
(21) Application number: 10151445.3
(22) Date of filing: 22.01.2010
(51) Int. Cl.: G11B 7/24

(54) **Information storage medium and apparatus for recording/reproducing the same**

(30) Priority: 23.01.2009 KR 20090006258
(71) Applicant: SAMSUNG ELECTRONICS CO., LTD., Suwon-si Gyeonggi-do 442-742 (KR)
(72) Inventor: Kim, Joo-ho, Gyeonggi-do (KR); Hong, Tao, Gyeonggi-do (KR)
(74) Representative: Robinson, Ian Michael

(57) **Abstract**

An information storage medium (10,100) and an apparatus for recording/reproducing the same are provided. The information storage medium is provided in which repetitive recording is performed by using nanorods formed of a material capable of repeatedly changing light absorption.

## Description

### CROSS-REFERENCE TO RELATED APPLICATION(S)

This application claims the benefit under 35 U.S.C. § 119(a) of Korean Patent Application No. 10-2009-0006258, filed on January 23, 2009, in the Korean Intellectual Property Office, the entire disclosure of which is incorporated herein by reference for all purposes.

### BACKGROUND

### 1. Field

The following description relates to an information storage medium and an apparatus for recording/reproducing the same, and, in particular, to an information storage medium capable of improving interlayer crosstalk and multi-dimensional repetitive recording during the recording of multi-layers and an apparatus for recording/reproducing the same.

### 2. Description of the Related Art

In order to increase the storage capacity of information storage media, research into information storage media with a super-resolution near-field structure (Super-RENS) in which a short wavelength laser beam and an objective lens with a high numerical aperture are used or information storage media with a multilayer structure have been actively conducted. As a result, blu-ray discs (BDs), which has a multilayer structure having a storage capacity of about 25 GB for each layer and using a blue-violet laser diode and an objective lens having a numerical aperture of 0.85 has been realized. BDs may record about two (2) hours of a high-definition television (HDTV) program or about thirteen (13) hours of a standard TV program.

Single layer BDs can record 25 GB of information, and dual layer BDs recently can record 50 GB of information. High-density multilayer information storage media that record 100 GB of information are being developed.

Multilayer information storage media have storage capacity that is almost N times (N being the number of recording layers) greater than single layer information storage media.

The thickness and reflectivity of each spacer layer are important factors in determining the signal characteristics of information storage media in order to constitute a multilayer information storage medium structure, where a spacer layer is defined as a layer between adjacent recording layers, and the thickness of the spacer layer must be sufficient to prevent crosstalk between recording layers from occurring. Further, it is necessary to match the reflectivity of each recording layer in order to detect a signal greater than a predetermined size in an optical detector.

In order to compensate for a spherical aberration in multilayer information storage media, the total thickness of all layers must be within a compensation range of a compensation member, such as a beam expander, which makes it difficult to increase a desired total number of recording layers.

### SUMMARY

According to the present invention there is provided an apparatus and method as set forth in the appended claims. Other features of the invention will be apparent from the dependent claims, and the description which follows.

In one general aspect, there is provided an information storage medium capable of improving interlayer crosstalk during the recording of multilayers that increase a desired number of recording layers and multi-dimensional repetitive recording, and a method and apparatus for recording or reproducing the information storage medium.

According to an aspect, there is provided an information storage medium in which repetitive recording is performed by using nanorods formed of a material capable of repeatedly changing light absorption.

The nanorods may be formed of a phase change material and information is recorded by a difference in the light absorption in an amorphous state and a crystalline state.

Aspect ratios of the nanorods may remain constant, irrespective of the amorphous state and the crystalline state.

The nanorods may be formed of a chalcogenide material.

The information storage medium may include: at least one nanorod alignment layer in which the nanorods are aligned.

The at least one nanorod alignment layer may include a plurality of nanorod alignment layers, wherein the plurality of nanorod alignment layers have different nanorod alignment directions so that the information is recorded or reproduced by using light of different polarizations having a polarization direction in parallel to a nanorod alignment direction of each of the plurality of nanorod alignment layers.

The nanorods having a single type of aspect ratio may be aligned in each of the plurality of nanorod alignment layers and the information is recorded or reproduced by using light of a single wavelength or the nanorods having a plurality of types of aspect ratios are aligned in each of the plurality of nanorod alignment layers and the information is recorded or reproduced by using light of a plurality of wavelengths.

The plurality of nanorod alignment layers may be disposed in an effective focal depth of a light beam focused by an objective lens so that the information is recorded or reproduced on/from the plurality of nanorod alignment layers by adjusting a polarization direction of incident light without movement of the objective lens.

A separate space layer may not be disposed between the nanorod alignment layers adjacent to the plurality of nanorod alignment layers.

The plurality of nanorod alignment layers may be repeatedly stacked, and a space layer may be disposed between the plurality of stacked nanorod alignment layers.

The plurality of nanorod alignment layers of each stack may be disposed in the effective focal depth of the light beam focused by the objective lens so that the information is recorded or reproduced on/from the plurality of nanorod alignment layers of a stack by adjusting a polarization direction of incident light without movement of the objective lens, when there is a change in the stacks including the plurality of nanorod alignment layers on which the information is to be recorded or reproduced, in a state where a light beam is focused onto a stack including a nanorod alignment layer on which the information is to be recorded or reproduced, the information is recorded or reproduced on/from the nanorod alignment layer of the corresponding stack.

When the information is recorded or reproduced on/from the plurality of nanorod alignment layers of a stack, the space layer may be used to secure a distance between stacks in order to prevent recording or reproduction of information on the plurality of nanorod alignment layers of stacks adjacent to the stack.

The at least one nanorod alignment layer may include a single nanorod alignment layer, nanorods having a single type of aspect ratio are aligned in the single nanorod alignment layer and the information is recorded or reproduced by using light of a single wavelength or nanorods having a plurality of types of aspect ratios are aligned in the single nanorod alignment layer and multiple wavelength information is recorded or reproduced by using light of a wavelength corresponding to each of the plurality of types of aspect ratios.

Nanorods may be aligned in a plurality of nanorod alignment directions in the single nanorod alignment layer so that multiple polarization information is recorded or reproduced by using light having a polarization direction in parallel to each of the plurality of nanorod alignment directions.

A single nanorod alignment layer may be repeatedly stacked. A space layer may be disposed between the repeatedly stacked single nanorod alignment layer, wherein, when the information is recorded or reproduced on/from one of the repeatedly stacked single nanorod alignment layers, the space layer is used to secure a distance between the one of the repeatedly stacked single nanorod alignment layers and any of the repeatedly stacked nanorod alignment layers adjacent to the one of the repeatedly stacked single nanorod alignment layers in order to prevent recording or reproduction of information on/from any of the repeatedly stacked single nanorod alignment layers adjacent to the one of the repeatedly stacked single nanorod alignment layers.

According to another aspect, there is provided a recording and/or reproducing apparatus including: an optical pickup changing polarization or wavelength, irradiating light onto the information storage medium, and detecting light reproduced from the information storage medium in order to record information onto the information storage medium and/or reproduce the information recorded onto the information storage medium.

Other features and aspects will be apparent from the following detailed description, the drawings, and the claims.

### BRIEF DESCRIPTION OF THE DRAWINGS

FIG. 1 is a graph illustrating light absorption characteristics with regard to incident polarized light of nanorods according to an example embodiment.
FIG. 2 illustrates the reproduction results of characters "A" and "B" according to incident polarized light when the characters "A" and "B" are recorded in the same region of nanorod alignment layers by using horizontally polarized light and vertically polarized light, respectively, according to an example embodiment.
FIG. 3 is a graph illustrating optical wavelength absorption characteristics with respect to aspect ratios (e.g., lengths) of nanorods, according to an example embodiment.
FIG. 4 illustrates the reproduction results of characters "C" and "D" according to incident different wavelength when the characters "C" and "D" are recorded in the same region of a nanorod alignment layer by using light having a wavelength of 710 nm and light having a wavelength of 850 nm, respectively, according to an example embodiment.
FIG. 5 is a graph showing light absorption of nanorods in a no change state (original), a recording state, and an initialization state, according to an example embodiment.
FIGs. 6A through 6C illustrate a process of recording a phase change in nanorods formed of a phase change material, according to an example embodiment.
FIGs. 7A and 7B schematically illustrate an information storage medium according to an example embodiment.
FIG. 8 schematically illustrates nanorod alignment layers shown in FIGs. 7A and 7B, according to an example embodiment.
FIG. 9 schematically illustrates first through fourth nanorod alignment layers shown in FIG. 8 that are repeatedly stacked according to an example embodiment.
FIG. 10 illustrates nanorods having one type of aspect ratio in one direction on a nanorod alignment layer according to an example embodiment.
FIG. 11 illustrates nanorods having two types of aspect ratios in one direction on a nanorod alignment layer, according to an example embodiment.
FIGs. 12A and 12B schematically illustrate an information storage medium according to another example embodiment.
FIGs. 13A through 13C schematically illustrates nanorods aligned in the nanorod alignment layer of the information storage medium shown in FIGs. 12A and 12B, according to example embodiments.
FIG. 14 schematically illustrates a single nanorod alignment layer, as shown in FIGs. 12A and 12B, that is repeatedly stacked, according to an example embodiment.
FIG. 15 illustrates an apparatus for recording or reproducing information on/from an information storage medium, according to an example embodiment.
FIGs. 16 and 17 schematically illustrate a main optical structure of an optical pickup applicable to the apparatus for recording or reproducing information shown in FIG. 15, according to an example embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. The progression of operations described is an example; however, the sequence of operations is not limited to that set forth herein and may be changed as is known in the art, with the exception of operations necessarily occurring in a certain order. Also, descriptions of well-known functions and constructions may be omitted for increased clarity and conciseness.

An information storage medium according to an example embodiment uses nanorods formed of a phase change material, such as a chalcogenide-based material, of which the light absorption varies, to perform at least one information recording, for example, repetitive information recording.

For example, when the nanorods formed of the phase change material, such as the chalcogenide-based material, are applied to the information storage medium, the nanorods have different light absorptions in crystalline and amorphous states, and the difference in the light absorption makes it possible to record information or reproduce the recorded information. Also, the nanorods can be changed between the crystalline and amorphous states, making it possible to repeatedly change light absorption of the nanorods, thereby performing repetitive recording.

In this regard, since the nanorods of the information storage medium have no substantial change in an aspect ratio in crystalline and amorphous states, information can be reproduced by using light having the same wavelength as in recording the information.

Also, the nanorods have high absorption characteristics with regard to polarized light in the same directions as alignment directions of the nanorods and high absorption characteristics with regard to light in a specific wavelength band corresponding to an aspect ratio of the nanorods. Therefore, the information storage medium can realize multilayer recording or polarization and/or wavelength-based multiple recording by using the light absorption characteristic that depends on polarization directions of the nanorods and the absorption characteristic of a specific wavelength band light according to aspect ratios of the nanorods.

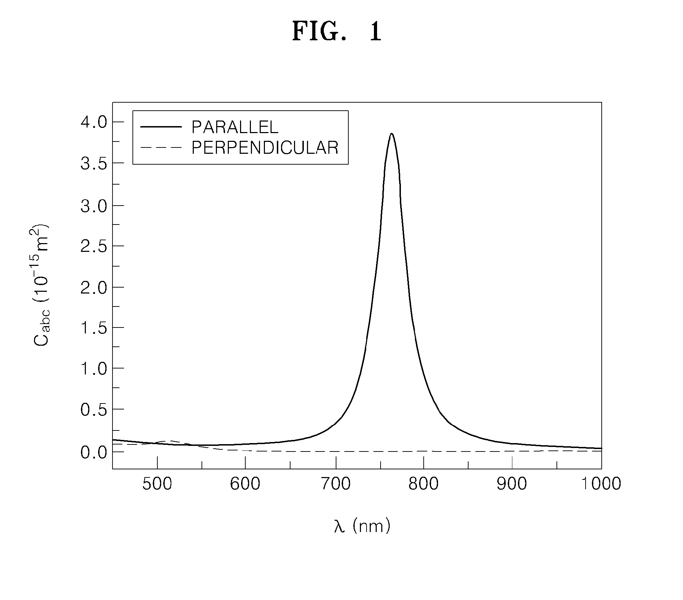

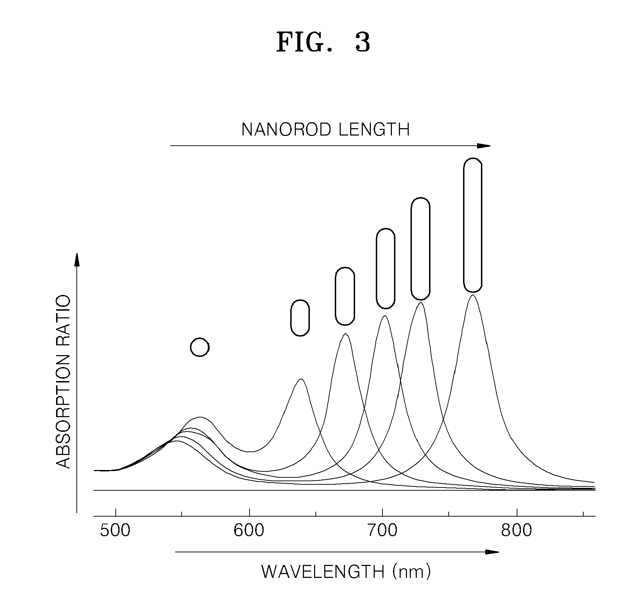

In addition, as shown in the graph of FIG. 1, nanorods have high light absorption with regard to polarized light in parallel to length directions of the nanorods, whereas most of the nanorods do not absorb polarized light perpendicular to the length directions of the nanorods. Also, as shown in the graph of FIG. 3, nanorods have different absorption wavelength peak locations according to aspect ratios of the nanorods.

Therefore, the information storage medium according to an example embodiment may allow nanorods to have a plurality of types of aspect ratios and perform multiple wavelength recording/reproduction or allow nanorods to align in a plurality of alignment directions and perform polarization multiple recording/reproduction so that a single recording layer can obtain an information storage capacity corresponding to a plurality of recording layers. Further, the information storage medium may include a plurality of nanorod alignment layers having different nanorod alignment directions to perform multiple recording.

FIG. 1 is a graph illustrating light absorption characteristics with regard to incident polarized light of nanorods, according to an example embodiment. Referring to FIG. 1, the nanorods have high light absorption with regard to polarized light in parallel to length directions of the nanorods, whereas the nanorods do not absorb polarized light perpendicular to the length directions of the nanorods. In the graph of FIG. 1, metal (e.g., gold (Au)) nanorods having an aspect ratio of 3.5:1 are aligned in matrix polyvinyl alcohol (PVA) having a refractive index of 1.5.

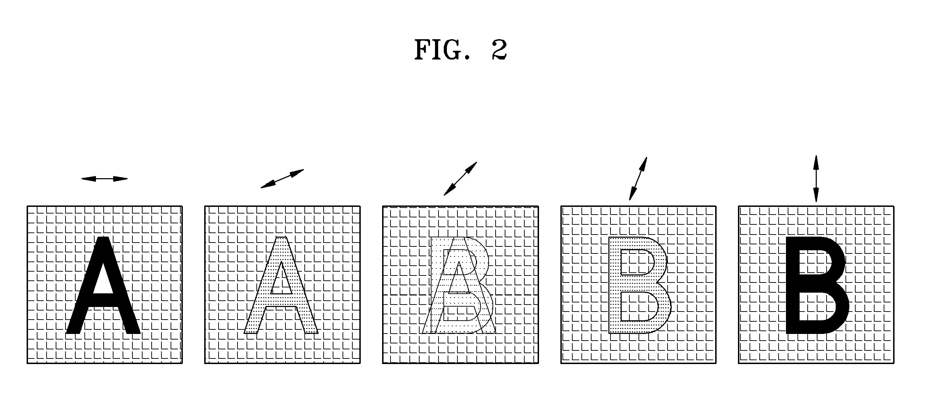

FIG. 2 illustrates the reproduction results of characters "A" and "B" according to incident polarized light when the characters "A" and "B" are recorded in the same region of nanorod alignment layers by using horizontally polarized light and vertically polarized light, respectively, according to an example embodiment. Referring to FIG. 2, light having a wavelength of about 850 nm and energy of E ≈ 7 nJ/pulse is focused on an objective lens having a numerical aperture of about 0.7 and is recorded at a repetition rate of 100 kHZ.

When the horizontally polarized light used to record the character "A" is irradiated, the character "A" is reproduced. When the vertically polarized light used to record the character "B" is irradiated, the character "B" is reproduced. When the irradiated light is closer to the horizontally polarized light, the character "A" mainly appears, and when the irradiated light is closer to the vertically polarized light, the character "B" mainly appears.

Thus, nanorods aligned in parallel to the horizontally polarized light are not affected by the vertically polarized light, and nanorods aligned in parallel to the vertically polarized light are not affected by the horizontally polarized light.

FIG. 3 is a graph illustrating light wavelength absorption characteristics with respect to aspect ratios (e.g., lengths) of nanorods, according to an example embodiment. Referring to FIG. 3, nanorods have different absorption wavelength peak locations according to aspect ratios (corresponding to length when nanorods have the same width). Nanorods absorb light in a specific wavelength band according to aspect ratios and do not mostly absorb light beyond the specific wavelength band. The shorter nanorods are nanorods that absorb light in a short wavelength band, and the longer nanorods are nanorods that absorb light in a long wavelength band. Therefore, multiple wavelength recording can be achieved and wavelength multi-recording information can be reproduced, by using the selective wavelength absorption characteristics determined according to aspect ratios (e.g., lengths) of nanorods, for example, by applying different wavelengths of recording/reproducing light in the same region of nanorod alignment layers in which nanorods having a plurality of aspect ratios are aligned.

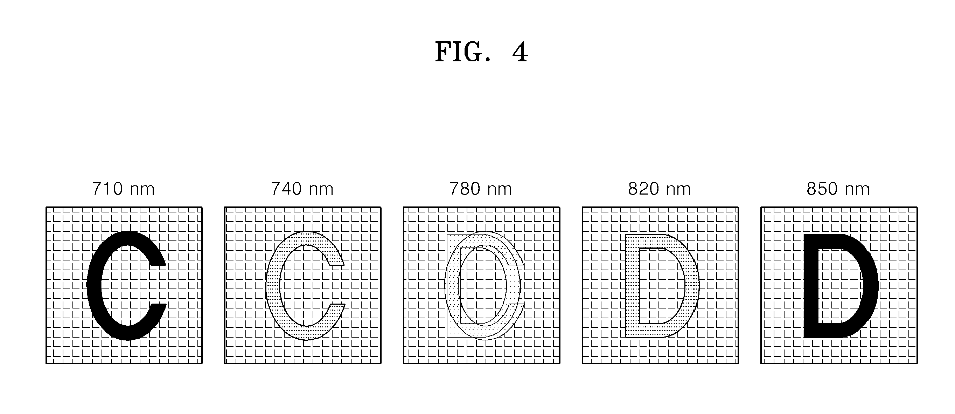

FIG. 4 illustrates the reproduction results of characters "C" and "D" according to incident different wavelength when the characters "C" and "D" are recorded in the same region of nanorod alignment layer by using light having a wavelength of 710 nm and light having a wavelength of 850 nm, respectively, according to an example embodiment. Referring to FIG. 4, the nanorod alignment layer includes nanorods having an aspect ratio (e.g., length) indicating an absorption peak in a wavelength band of about 710 nm and nanorods having an aspect ratio (e.g., length) indicating an absorption peak in a wavelength band of about 850 nm. Light having a wavelength range between about 710 nm and about 850 nm and energy of E ≈ 7nJ/pulse is focused by an objective lens having a numerical aperture of about 0.7 and is recorded at a repetition rate of 100 kHZ.

When light having a wavelength of 710 nm used to record the character "C" is irradiated, the character "C" is reproduced. When light having a wavelength of 850 nm used to record the character "D" is irradiated, the character "D" is reproduced. When the wavelength of the irradiated light is closer to 710 nm, the character "C" mainly appears, and when the wavelength of the irradiated light is closer to 850 nm, the character "D" mainly appears.

Thus, the nanorods having an aspect ratio (e.g., length) indicating an absorption peak in the wavelength of about 710 nm are not affected by the light having a wavelength of 850 nm, and the nanorods having an aspect ratio (e.g., length) indicating an absorption peak in the wavelength of about 850 nm are not affected by the light having a wavelength of 710 nm.

Therefore, when light having a specific polarization in parallel to length directions of nanorods and having a specific absorption wavelength band corresponding to aspect ratios (e.g., lengths) of the nanorods is irradiated, the nanorods may absorb the light to achieve recording of information.

Based on polarization-selective and/or wavelength-selective light absorption characteristics of the nanorods, multiple recording can be achieved by forming different alignment directions of nanorods for the respective nanorod alignment layers. Polarization multiple recording can be achieved by aligning nanorods in a plurality of alignment directions in each respective nanorod alignment layer and using polarization-selective light absorption characteristics, and/or multiple wavelength recording can be achieved based on wavelength-selective light absorption characteristics according to aspect ratios of nanorods.

For example, when an information storage medium includes a plurality of nanorod alignment layers in which nanorods are aligned in different directions, information can be recorded on each nanorod alignment layer by changing the polarization of irradiated light to be parallel to a nanorod alignment direction of a nanorod alignment layer on which the information is to be recorded. In this case, each of the nanorod alignment layers having different nanorod alignment directions is a recording layer, thereby increasing the number of recording layers as desired by aligning nanorods in different directions according to each of nanorod alignment layers. In this regard, information can be recorded or reproduced by aligning nanorods having a single type of aspect ratio in each nanorod alignment layer and using a single wavelength of light. Also, information can be recorded or reproduced in multiple wavelength by aligning nanorods having a plurality of types of aspect ratios in each nanorod alignment layer and using a plurality of wavelengths of light.

The information storage medium according to an example embodiment may include a single nanorod alignment layer and perform multiple wavelength recording by aligning nanorods having a plurality of types of aspect ratios in the single nanorod alignment layer in a single alignment direction, or perform polarization multiple recording by aligning nanorods having a single type of aspect ratio in the single nanorod alignment layer in a plurality of alignment directions, or perform multiple wavelength recording and polarization multiple recording by aligning nanorods having a plurality of types of aspect ratios in the single nanorod alignment layer in a plurality of alignment directions.

Hereinafter, a variety of examples of the information storage medium will now be described further. For example and for descriptive convenience, nanorods formed of a phase change material, such as a chalcogenide-based material, are applied to the information storage medium, and accordingly, embodiments are is not limited thereto. That is, any material which can repeatedly change light absorption may be used as a nanorod material of the information storage medium.

Nanorods formed of the phase change material, e.g., the chalcogenide-based material, may be aligned to have directivity in a nanorod alignment layer of the information storage medium. Most of nanorods may be aligned in one direction in the nanorod alignment layer. Nanorods are aligned to have different nanorod alignment directions in a plurality of nanorod alignment layers so that each of the nanorod alignment layers can be a recording layer. Thus, the information storage medium may be a multilayer information storage medium having multilayer recording layers.

As described above, nanorods aligned in the nanorod alignment layer have high light absorption with regard to polarized light in parallel to length directions of the nanorods, whereas the nanorods do not mostly absorb polarized light perpendicular to the length directions of the nanorods. Therefore, information can be recorded on each nanorod alignment layer by changing polarization of light irradiated onto a plurality of nanorod alignment layers having different nanorod alignment directions to be parallel to a nanorod alignment direction of a nanorod alignment layer on which the information is to be recorded. In this case, each of the nanorod alignment layers having different nanorod alignment directions is a recording layer, thereby increasing the number of recording layers as desired by aligning nanorods in different directions according to each of nanorod alignment layers.

As described above, the nanorods aligned in the nanorod alignment layers have different absorption wavelength peak locations according to aspect ratios of the nanorods. Thus, nanorods having a plurality of types of aspect ratios can be aligned in each nanorod alignment layer. In this case, light of a plurality of wavelengths is used to record or reproduce wavelength multiple information in a single nanorod alignment layer. Nanorods having a single type of aspect ratio can be aligned in each nanorod alignment layer. In this case, light of a single wavelength is used to record/reproduce information in a plurality of nanorod alignment layers. In this regard, nanorods having different aspect ratios may be aligned in adjacent nanorod alignment layers so that light having different wavelengths can be used to record and reproduce information in the adjacent nanorod alignment layers.

As described above, the information storage medium may align nanorods formed of the phase change material having a single aspect ratio or a plurality of types of aspect ratios in each nanorod alignment layer while the plurality of nanorod alignment layers have different nanorod alignment directions. In this case, if the information storage medium has N nanorod alignment layers and nanorods having M types of aspect ratios aligned in each nanorod alignment layer, the information storage medium can obtain an information storage capacity corresponding to information recorded onto N * M recording layers.

Meanwhile, the information storage medium may include a single nanorod alignment layer in which nanorods formed of the phase change material are aligned to have a plurality of directivities.

For example, when the information storage medium has a single nanorod alignment layer that nanorods formed of the phase change material are aligned to have a plurality of alignment directivities and simultaneously have a plurality of types of aspect ratios, the information storage medium may record wavelength multiple information and polarization multiple information regarding the single nanorod alignment layer. If the aligned nanorods have M types of aspect ratios and L types of alignment directivities, the information storage medium can obtain an information storage capacity corresponding to information recorded on L * M recording layers while having a single recording layer.

In this regard, when the information storage medium has a single nanorod alignment layer that the nanorods formed of the phase change material are aligned to have a single alignment directivity and simultaneously have a plurality of types of aspect ratios, the information storage medium may record wavelength multiple information regarding the single nanorod alignment layer. If the aligned nanorods have M types of aspect ratios, the information storage medium can obtain an information storage capacity corresponding to information recorded on M recording layers while actually having only a single recording layer.

When the information storage medium has a single nanorod alignment layer that the nanorods formed of the phase change material are aligned to have a plurality of alignment directivities and simultaneously have a single type of aspect ratio, the information storage medium may record polarization multiple information regarding the single nanorod alignment layer. If the aligned nanorods have L types of alignment directivities, the information storage medium can obtain an information storage capacity corresponding to information recorded on L recording layers while actually having only a single recording layer.

As another example, when the information storage medium has a plurality of nanorod alignment layers that the nanorods formed of the phase change material are aligned to have a plurality of alignment directivities and each of the nanorods has different aspect ratios, the information storage medium may record/reproduce multilayer polarization multiple information by using light having different wavelengths with regard to each nanorod alignment layer. If each nanorod alignment layer has L types of alignment directivities and N nanorod alignment layers, the information storage medium can obtain an information storage capacity corresponding to information recorded on L * N recording layers.

As described above, the information storage medium can achieve repetitive information recording by forming a nanorod alignment layer having nanorods formed of a phase change material, and realize multilayer recording, polarization multiple recording and/or wavelength multiple recording by using light absorption characteristics depending on polarization directions of nanorods and/or absorption characteristics of light in a specific wavelength band according to aspect ratios of nanorods.

In this regard, the polarization selective light absorption of nanorods uses a surface plasmon resonance (SPR). When light in an absorption wavelength band according to aspect ratios having a polarization component in parallel to length directions of nanorods is irradiated onto a nanorod alignment layer, a great amount of light is absorbed by the SPR. Recording is made by the SPR absorption and greatly depends on polarization direction and light wavelength band.

Meanwhile, nanorods formed of the phase change material have low light absorption due to a large energy band gap in an amorphous state and have high light absorption due to a relatively small energy band gap in a crystalline state. This is a great amount of free electrons are gathered on the surface of nanorods in the crystalline state due to a small energy band gap and thus a large SPR may occur. In this regard, aspect ratios of nanorods formed of the phase change material are not substantially changed when the nanorods are changed from the amorphous state to the crystalline state.

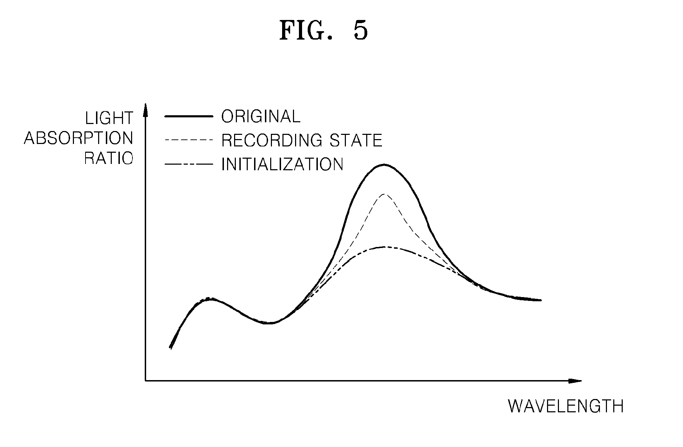

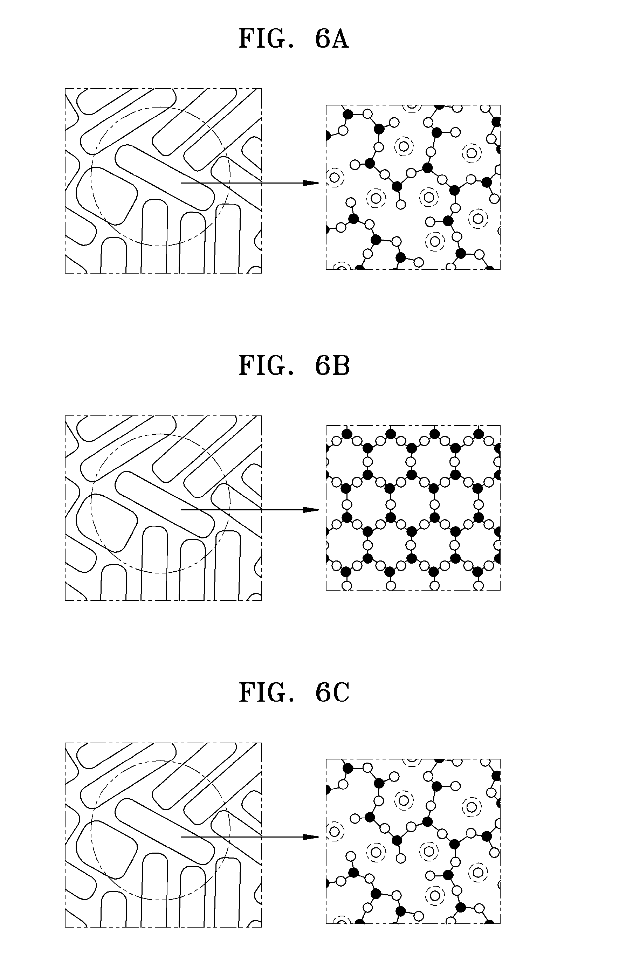

FIG. 5 is a graph showing light absorption of nanorods in a no change state (original), a recording state, and an initialization state, according to an example embodiment. FIGS. 6A through 6C illustrate a process of recording a phase change in nanorods formed of a phase change material, according to an example embodiment.

Referring to FIG. 5, the light absorption of nanorods in the recording state is lower than in the no change state (original) and is much higher than the initialization state. The nanorods are in a crystalline state in the original and recording states, whereas the nanorods are in an amorphous state in the initialization state.

Referring to FIG. 6A, in order to initialize (amorphizate) the nanorods, if light is irradiated to the nanorods, the temperature of the nanorods is increased to around a melting point, and the nanorods are cooled, the nanorods are amorphizated and have a wide band gap. When reproduction light is irradiated onto the nanorods in the amorphous state, bound electrons are less likely changed into free electrons by the wide band gap, which reduces the occurrence of the SPR so that the nanorods in the amorphous state have low light absorption.

Referring to FIG. 6B, if light is irradiated onto the nanorods in the amorphous state and the temperature of the nanorods is increased to around a crystalline temperature, the nanorods are gradually cooled and remain in a crystalline state. When reproduction light is irradiated onto the nanorods in the crystalline state, bound electrons are more likely changed into free electrons by a narrow band gap, which increases the occurrence of the SPR so that the nanorods in the crystalline state have high light absorption.

Therefore, information can be reproduced according to a change in the light absorption by irradiating the reproduction light onto a nanorod alignment layer in which the nanorods are aligned.

Referring to FIG. 6C, if light is irradiated to the nanorods in the crystalline state, the temperature of the nanorods is increased to around a melting point, and the nanorods are cooled, the nanorods are amorphizated so as to initialize the nanorods or change them to an information erasure state.

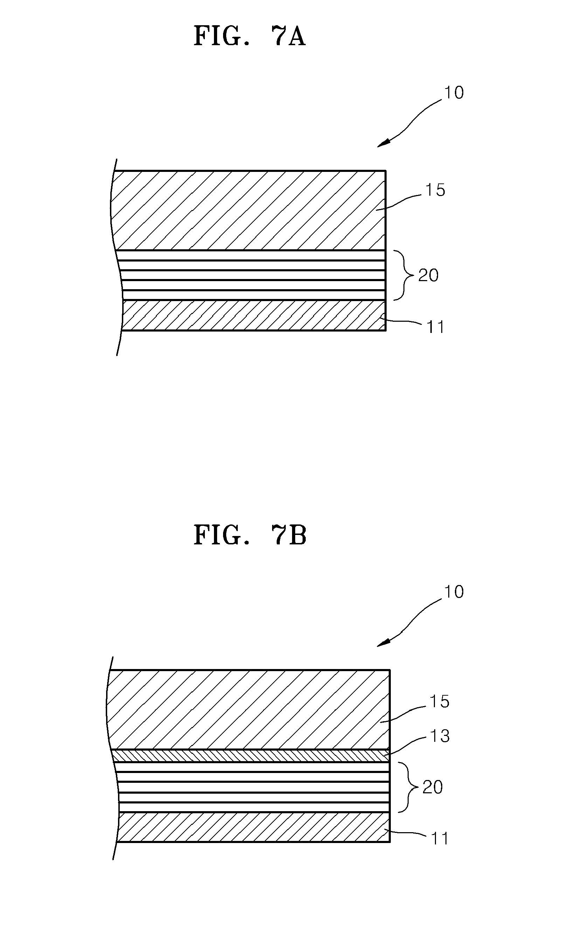

FIGs. 7A and 7B schematically illustrate information storage medium 10 according to example embodiments. Referring to FIGs. 7A and 7B, the information storage medium 10 of one embodiment may include a cover layer 11, a nanorod alignment layer 20 and a substrate 15 that are sequentially aligned from a surface on which a light beam is incident. In this regard, the cover layer 11, the nanorod alignment layer 20, and the substrate 15 may be inversely aligned. That is, the light beam may be incident through the substrate 15. Referring to FIG. 7A, transmission light is detected during the reproduction of information. Referring to FIG. 7B, the information storage medium 10 further includes a reflection layer 13 for reflecting light and disposed between the substrate 15 and the nanorod alignment layers 20, compared to the information storage medium 10 shown in FIG. 7A, and reflected light is detected during the reproduction of information. The reflection layer 13 may be disposed on the outside of the substrate 15. Also, when the light beam is incident through the substrate 15, the reflection layer 13 may be disposed between the nanorod alignment layer 20 and the cover layer 11 or on the outside of the cover layer 11.

Although the information storage medium 10 includes the cover layer 11, the nanorod alignment layer 20, and the substrate 15 or includes the cover layer 11, the nanorod alignment layer 20, the reflection layer 13, and the substrate 15 with reference to FIGs. 7A and 7B, this is only one example and the information storage medium 10 may include an additional layer.

Nanorods formed of a material for repeatedly changing light absorption, for example, a phase change material such as a chalcogenide-based material, are aligned in the nanorod alignment layer 20. In this regard, the nanorods aligned in the nanorod alignment layer 20 may contain any one of GeSb_{y}Te_{z}, SbₓTe_{y}, and AgₓIn_{y}Sbx_{z}Teₐ.

The nanorod alignment layer 20 includes a plurality of nanorod alignment layers having different nanorod alignment directions to form recording layers, respectively, and constitute a multilayer recording layer. Information is recorded or reproduced on/from the nanorod alignment layers by using different polarized light.

The nanorod alignment layer 20 may have a plurality of nanorod alignment layers having different nanorod alignment directions, so that the information is recorded or reproduced by different polarized light. In this regard, nanorods having the same or similar aspect ratio or a plurality of aspect ratios may be aligned in each of the nanorod alignment layers. As described above, when the nanorods having the plurality of aspect ratios may be aligned in each of the nanorod alignment layers, if the types of aspect ratios are P, each of the nanorod alignment layers may store information corresponding to information storage capacity of P recording layers according to wavelength multiple recording. That is, if the number of nanorod alignment layers is Q, the information storage medium includes P * Q effective recording layers. When nanorods having a single aspect ratio are aligned in each of the nanorod alignment layers, if the number of nanorod alignment layers is Q, the information storage medium includes Q effective recording layers.

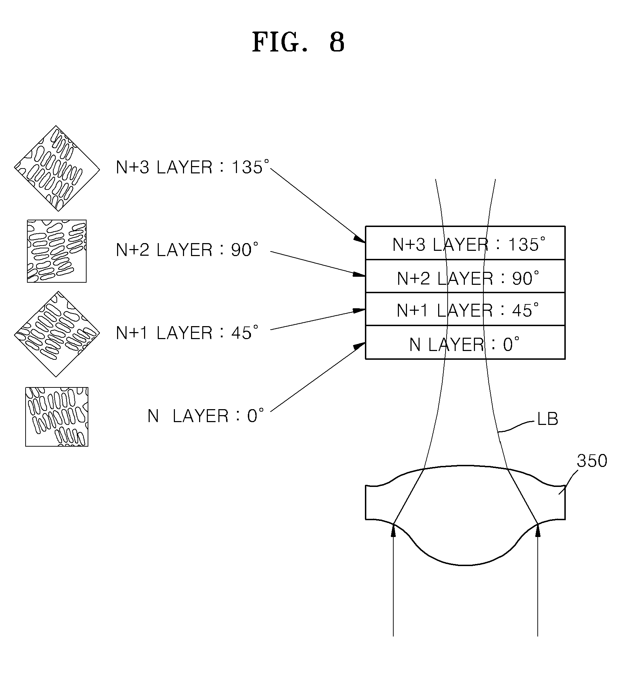

As will be described in FIG. 8, a plurality of nanorod alignment layers N, N + 1, N + 2, and N + 3 may be disposed in an effective focal depth of a light beam LB focused by an objective lens 350 so that information can be recorded or reproduced on/from each of the nanorod alignment layers N, N + 1, N + 2, and N + 3 by adjusting a polarization direction of an incident light without moving the objective lens 350. In this regard, interlayer nanorod alignment directions of the nanorod alignment layers N, N + 1, N + 2, and N + 3 may equally or unequally vary. Also, an additional space layer is not required between the adjacent nanorod alignment layers of the nanorod alignemtn layers N, N + 1, N + 2, and N + 3 that are disposed in the effective focal depth of the light beam LB focused by the objective lens 350. In this regard, since the light beam LB is focused in the form of a beam waist, light intensity range is almost uniform by which recording is possible without a focal movement of the objective lens 350. The light intensity range corresponds to the effective focal depth of the light beam LB.

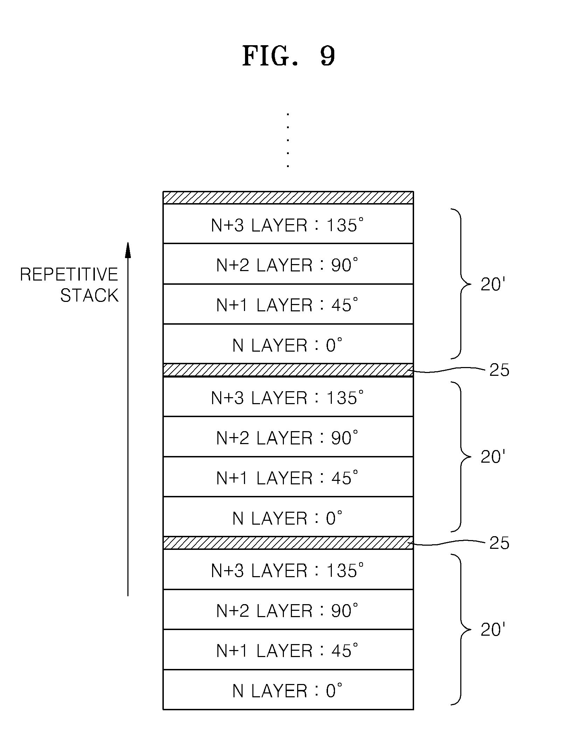

As will be described in FIG. 9, the nanorod alignment layers N, N + 1, N + 2, and N + 3 are repeatedly stacked respectively as nanorod alignment layer stacks 20' and a space layer 25 for preventing crosstalk between the nanorod alignment layer stacks 20' may be disposed between the nanorod alignment layer stacks 20'.

When information is recorded or reproduced on/from the nanorod alignment layers N, N + 1, N + 2, and N + 3 of one of the nanorod alignment layer stacks 20', the space layer 25 is used to secure a distance between the one of the nanorod alignment layer stacks 20' and any nanorod alignment layer stacks 20' adjacent to the one of the nanorod alignment layer stacks 20' and prevent recording or reproduction of information on the nanorod alignment layers N, N + 1, N + 2, and N + 3 of each of the adjacent nanorod alignment layer stacks 20'. The nanorod alignment layers N, N + 1, N + 2, and N + 3 of one of the nanorod alignment layer stacks 20' are disposed in the effective focal depth of the light beam LB focused by the objective lens 350. Information may be recorded or reproduced on/from the first through fourth nanorod alignment layers N, N + 1, N + 2, and N + 3 of the adjacent nanorod alignment layer stacks 20' by adjusting a polarization direction of an incident light without moving the objective lens 350. When the nanorod alignment layer stacks 20' including the nanorod alignment layers N, N + 1, N + 2, and N + 3 on which the information is to be recorded or reproduced change, for example, when the light beam LB is focused onto the nanorod alignment layer stacks 20' including the nanorod alignment layers N, N + 1, N + 2, and N + 3 on which the information is to be recorded or reproduced by adjusting the location of the objective lens 350 in a focal direction, information may be recorded or reproduced on/from the nanorod alignment layers N, N + 1, N + 2, and N + 3 of the nanorod alignment layer stacks 20'. In this regard, interlayer nanorod alignment directions of the nanorod alignment layers N, N + 1, N + 2, and N + 3 may equally or unequally vary. An additional space layer may not be disposed between the adjacent nanorod alignment layers of the nanorod alignment layers N, N + 1, N + 2, and N + 3 of each of the nanorod alignment layer stacks 20'.

FIG. 8 schematically illustrates an example of the nanorod alignment layers 20 shown in FIGS. 7A and 7B, according to an example embodiment. Referring to FIG. 8, the nanorod alignment layer 20 having a 4-layer structure, in which first through fourth nanorod alignment layers N, N + 1, N + 2, and N + 3, respectively, having nanorod alignment directions of 0°, 45°, 90°, and 135° are disposed, is illustrated.

Referring to FIG. 8, when information of about 25 GB is recorded on one of the first through fourth nanorod alignment layers N, N + 1, N + 2, and N + 3, a high-capacity information storage medium of 100 GB can be achieved.

The first through fourth nanorod alignment layers N, N + 1, N + 2, and N + 3 are disposed in the effective focal depth of the light beam LB focused by the objective lens 350 so that information can be recorded or reproduced on/from the first through fourth nanorod alignment layers N, N + 1, N + 2, and N + 3 by adjusting a polarization direction of light without moving the objective lens 350. In this regard, interlayer nanorod alignment directions of the first through fourth nanorod alignment layers N, N + 1, N + 2, and N + 3 may equally or unequally vary as shown in FIG. 8. An additional space layer is not required between the adjacent nanorod alignment layers of the first through fourth nanorod alignment layers N, N + 1, N + 2, and N + 3.

FIG. 9 schematically illustrates the first through fourth nanorod alignment layers N, N + 1, N + 2, and N + 3 shown in FIG. 8 that are repeatedly stacked respectively as the nanorod alignment layer stacks 20', according to an example embodiment. Referring to FIG. 9, the first through fourth nanorod alignment layers N, N + 1, N + 2, and N + 3 are repeatedly stacked respectively as the nanorod alignment layer stacks 20', and the space layer 25 for preventing crosstalk between the nanorod alignment layer stacks 20' may be disposed between the nanorod alignment layer stacks 20'. The first through fourth nanorod alignment layers N, N + 1, N + 2, and N + 3 of each of the nanorod alignment layer stacks 20' are disposed in the effective focal depth of the light beam LB focused by the objective lens 350. Information may be recorded or reproduced on/from the first through fourth nanorod alignment layers N, N + 1, N + 2, and N + 3 of one of the nanorod alignment layer stacks 20' by adjusting a polarization direction of an incident light without moving the objective lens 350. When the nanorod alignment layer stack including the first through fourth nanorod alignment layers N, N + 1, N + 2, and N + 3 on which the information is to be recorded or reproduced change, for example, when the light beam LB is focused onto the nanorod alignment layer stack including the nanorod alignment layers on which the information is to be recorded or reproduced by adjusting the location of the objective lens 350 in a focal direction, information may be recorded or reproduced on/from the nanorod alignment layer of the desired nanorod alignment layer stacks. In this regard, interlayer nanorod alignment directions of the first through fourth nanorod alignment layers N, N + 1, N + 2, and N + 3 may equally or unequally vary. It is not necessary that an additional space layer is disposed between any of the adjacent nanorod alignment layers of the first through fourth nanorod alignment layers N, N + 1, N + 2, and N + 3 of each of the nanorod alignment layer stacks 20'.

Information will be recorded or reproduced on/from the information storage medium according to an example embodiment described with reference to FIGs. 7 through 9 below.

Light is incident through the information storage medium 10 including a plurality of nanorod alignment layers in which nanorods formed of a phase change material are aligned to have directivity, have different nanorod alignment directions, and constitute recording layers. Information may be recorded on/reproduced from each or at least some of the nanorod alignment layers by changing a polarization direction of the incident light. When light having linear polarization is incident, information is recorded on/reproduced from nanorod alignment layers having nanorod alignment directions in parallel to a polarization direction of the incident light.

Nanorods of a nanorod alignment layer having a nanorod alignment direction in parallel to the polarization of the incident light absorb the incident light. When nanorods are formed of a phase change material, a recording mechanism changes light absorption according to a phase change in the nanorods.

That is, information is recorded by generating the phase change in nanorods and changing nanorods in a crystalline state having a different light absorption to an amorphous state. A process of recording the phase change in nanorods will now be performed. For example, when a temperature of nanorods is increased to a melting point, e.g., about 600 °C, by irradiating light on nanorods, nanorods are amorphizated so as to initialize the nanorods or change them to an information erasure state. The temperature of nanorods is increased to a crystalline temperature, e.g., about 200 °C, so that the nanorods in the amorphous state are crystallized. The state where the nanorods are crystallized is a recording state. In order to erase recorded information or change the nanorods into an original state, the temperature of nanorods is increased to the melting point and nanorods are amorphizated.

As described above, nanorods increase to the melting point or increase to the crystallization temperature by absorbing irradiated light have nanorod alignment directions in parallel to the polarization of the incident light and have aspect ratio corresponding to wavelength of the incident light. Therefore, if polarization of irradiated light having a specific wavelength is adjusted to be in parallel to a nanorod alignment direction of a nanorod alignment layer on which information is to be recorded, nanorods having a desired alignment direction in a desired nanorod alignment layer and having aspect ratio corresponding to wavelength of the irradiated light may absorb the irradiated light so that the information can be recorded.

Meanwhile, in order to record or erase the information, when the nanorods are changed into the crystalline state or the amorphous state, since the nanorods maintain original aspect ratios, the nanorods react to light having a wavelength and a polarization corresponding to a specific aspect ratio and a specific nanorod alignment direction and thus multiple wavelength and/or polarization recording/reproduction can be achieved.

Further, since there is no change in the aspect ratios of the nanorods, interference between nanorods having specific aspect ratios after the recording and other aspect ratios corresponding to different wavelengths can be reduced during the multiple wavelength recording.

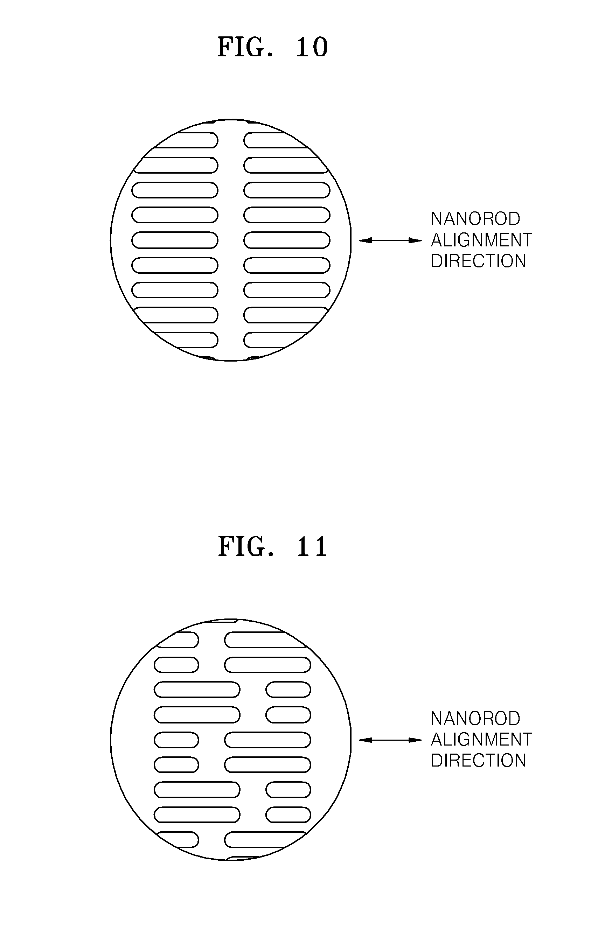

FIG. 10 illustrates nanorods having one type of aspect ratio in one direction on a nanorod alignment layer, according to an example embodiment. FIG. 11 illustrates nanorods having two types of aspect ratios in one direction on a nanorod alignment layer, according to an example embodiment.

As described above, referring to FIG. 10 or FIG. 11, the nanorods may be aligned in each nanorod alignment layer of an information storage medium having a plurality of nanorod alignment layers as described with reference to FIGs. 7 through 9. The nanorods may have different alignment directions in the nanorod alignment layers. Referring to FIG. 10, since information may be recorded on each nanorod alignment layer by using light having a single wavelength, one nanorod alignment layer corresponds to a single recording layer. Referring to FIG. 11, since information may be recorded on each nanorod alignment layer by using light having two types of different wavelengths, one nanorod alignment layer may record information corresponding to two recording layers.

If nanorods aligned in each nanorod alignment layer have three or more types of aspect ratios, information corresponding to three or more recording layers may be recorded on one nanorod alignment layer.

Meanwhile, incident light in a reproduction mode passes through a nanorod alignment layer having a nanorod alignment direction that is not in parallel to the polarization of the incident light and is absorbed by a nanorod alignment layer having a nanorod alignment direction in parallel to the polarization of the incident light. Thus, the amount of light passing through the corresponding nanorod alignment layer changes according to recorded information. A detection of the change in the amount of light enables to reproduce the recorded information. If the information storage medium does not include the reflection layer 13 shown in FIG. 7A, light passing through the information storage medium is detected as reproduction light. Otherwise, when the information storage medium includes the reflection layer 13 shown in FIG. 7B, light passing through the corresponding nanorod alignment layer is reflected by the reflection layer 13 and returns to the objective lens 350 (since the light travels in an opposite direction of the light incident through the information storage medium), thereby detecting the light reflected in the information storage medium as the reproduction light.

Therefore, a polarization direction of the incident light is changed to be in parallel to an alignment direction of each nanorod alignment layer, thereby recording/reproducing information on/from each nanorod alignment layer or at least some nanorod alignment layers.

As described above, the information storage medium 10 may constitute a multiple recording layer by different nanorod alignment directions of recording layers without a space layer. If a plurality of nanorod alignment layer groups, each constituting a recording layer, are repeatedly stacked, a desired number of recording layers can be achieved. When the plurality of nanorod alignment layers are N through N + L layers (where L is a negative integer or a positive integer), for example, since the N + L (or N - 1) through N + 1 layers having different nanorod alignment directions do not react to specific polarized light for the recording of the N^{th} layer, recording crosstalk is removed. During the reproduction, a change in the amount of transmitted or reflected light only for the corresponding nanorod alignment layer is detected according to a polarization direction of reproduction light, thereby removing reproduction crosstalk.

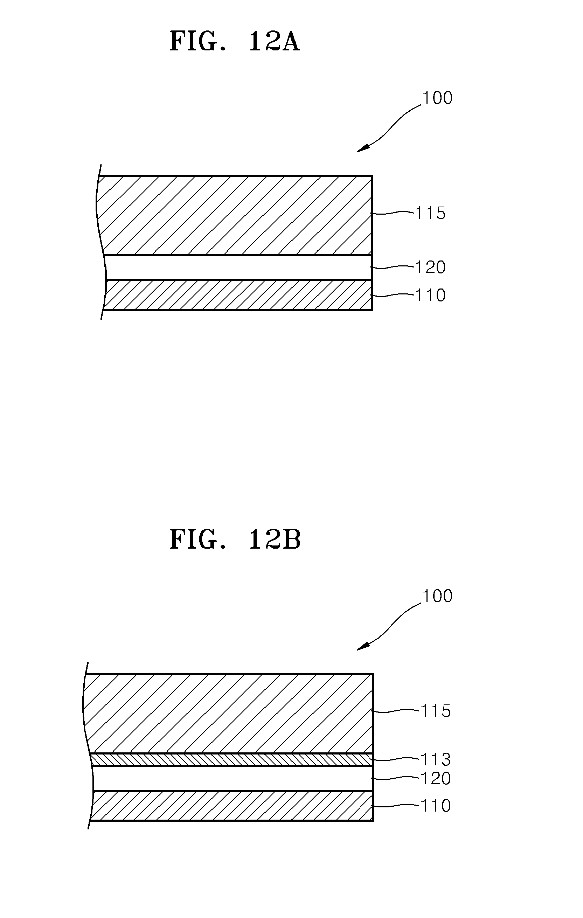

FIGs. 12A and 12B schematically illustrate an information storage medium 100 according to other example embodiments. Referring to FIGs. 12A and 12B, the information storage medium 100 may include a cover layer 110, a nanorod alignment layer 120 and a substrate 115 that are sequentially aligned from a surface on which a light beam is incident. In this regard, the cover layer 110, the nanorod alignment layer 120, and the substrate 115 may be inversely aligned. That is, the light beam may be incident through the substrate 115. Referring to FIG. 12A, transmission light is detected during the reproduction of information. Referring to FIG. 12B, the information storage medium 100 further includes a reflection layer 113 for reflecting light, compared to the information storage medium 100 shown in FIG. 12A, and reflection light is detected during the reproduction of information. Referring to FIG. 12B, the reflection layer 113 is disposed between the substrate 115 and the nanorod alignment layer 120. The reflection layer 113 may be disposed on the outside of the substrate 115. Also, when the light beam is incident through the substrate 115, the reflection layer 113 may be disposed between the nanorod alignment layer 120 and the cover layer 110 or on the outside of the cover layer 110.

Although the information storage medium 100 includes the cover layer 110, the nanorod alignment layer 120 and the substrate 115 or includes the cover layer 110, the nanorod alignment layer 120, the reflection layer 130, and the substrate 115, the described embodiments are only examples and the information storage medium 100 may include an additional layer.

Nanorods formed of a material for repeatedly changing light absorption, for example, a phase change material, are aligned in the nanorod alignment layer 120. In this regard, the nanorods aligned in the nanorod alignment layer 120 may contain any one of GeSb_{y}Te_{z}, SbₓTe_{y}, and AgₓIn_{y}Sb_{z}Teₐ.

The nanorod alignment layer 120 may be a single layer in which the nanorods may be aligned in a single nanorod alignment direction or a plurality of nanorod alignment directions. Further, the nanorods aligned in the nanorod alignment layer 120 may have a single type of aspect ratio or a plurality of types of aspect ratios.

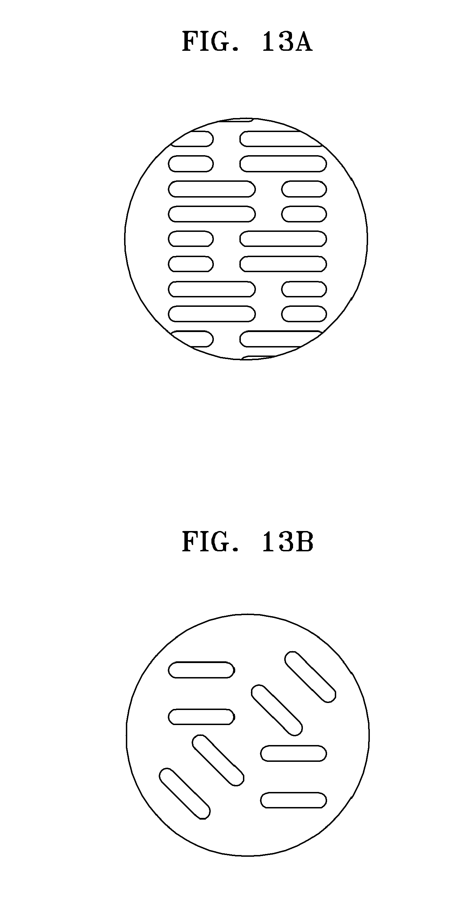

FIGs. 13A through 13C schematically illustrates nanorods aligned in the nanorod alignment layer 120 of the information storage medium 100 shown in FIGs. 12A and 12B, according to an example embodiment.

Referring to FIG. 13A, the nanorods are aligned in a single nanorod alignment direction in the nanorod alignment layer 120 and may have a plurality of types of aspect ratios. In this case, multiple wavelength recording may be performed on the nanorod alignment layer 120 so that information corresponding to the number of recording layers by the number of types of aspect ratios can be recorded on the single nanorod alignment layer. For example, nanorods having two types of aspect ratios are aligned in the nanorod alignment layer 120.

Referring to FIG. 13B, the nanorods may be aligned in a plurality of nanorod alignment directions in the nanorod alignment layer 120 and may have a single type of aspect ratio. In this case, multiple polarization recording of information corresponding to the number of recording layers by the number of nanorod alignment directions may be performed on the nanorod alignment layer 120. For example, nanorods are aligned in the nanorod alignment layer 120 in two alignment directions.

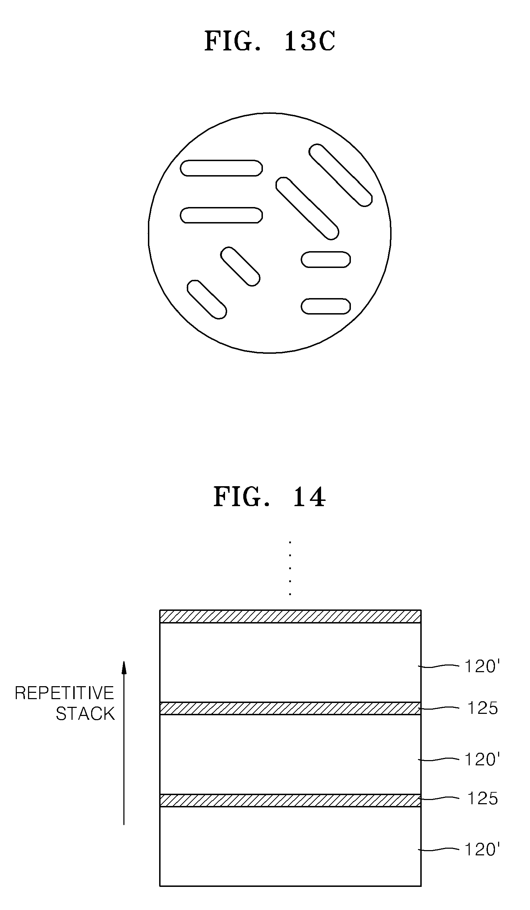

Referring to FIG. 13C, the nanorods may be aligned in a plurality of nanorod alignment directions in the nanorod alignment layer 120 and may have a plurality of types of aspect ratios. In this case, multiple wavelength and polarization recording of information corresponding to the number of recording layers obtained by multiplying the number of nanorod alignment directions by the number of types of aspect ratios may be performed on the nanorod alignment layer 120. The nanorods having two types of aspect ratios are aligned in the nanorod alignment layer 120 in two alignment directions.

Meanwhile, the thickness of the nanorod alignment layer 120 is within an effective focal depth of the light beam LB focused by the objective lens 350 so that information can be recorded or reproduced on/from a nanorod corresponding to light having a specific wavelength and a specific polarization by adjusting a polarization direction and/or a wavelength of an incident light without moving the objective lens 350. In this regard, since the light beam LB is focused in the form of a beam waist, a light intensity range is mostly uniform by which recording is possible without a focal movement of the objective lens 350. The light intensity range corresponds to the effective focal depth of the light beam LB.

The nanorod alignment layer 120 in which nanorods are aligned as described with reference to FIGs. 13A through 13C may include nanorod alignment layers 120' repeatedly stacked and a space layer 125 for preventing crosstalk between the nanorod alignment layers 120'. The space layer may be disposed between the nanorod alignment layers 120'.

When information is recorded or reproduced on/from a nanorod alignment layer, the space layer 125 is used to secure a distance between the nanorod alignment layers 120' in order to prevent recording or reproduction of information on/from a nanorod alignment layer adjacent to the nanorod alignment layer.

Each nanorod alignment layer 120' is disposed in the effective focal depth of the light beam LB focused by the objective lens 350. Information may be recorded or reproduced on/from a nanorod alignment layer by adjusting a polarization direction of an incident light without moving the objective lens 350. When a nanorod alignment layer on which the information is to be recorded or reproduced changes, for example, the light beam LB is focused onto the nanorod alignment layer on which the information is to be recorded or reproduced by adjusting the location of the objective lens 350 in a focal direction and, information may be recorded or reproduced on/from the corresponding nanorod alignment layer. It may not be necessary to include an additional space layer disposed between nanorod alignment layers adjacent to the nanorod alignment layer.

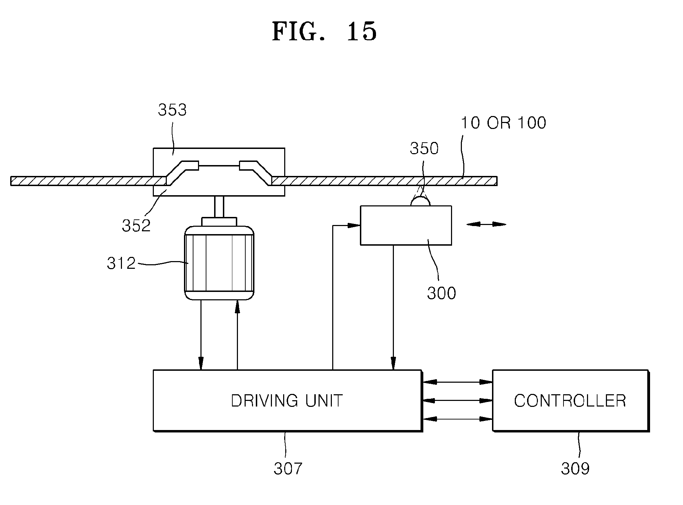

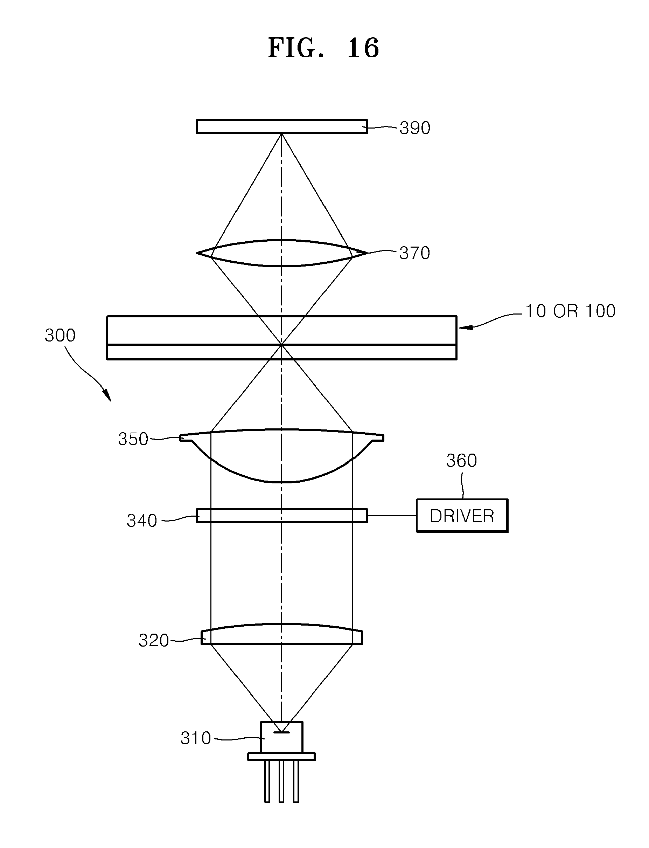

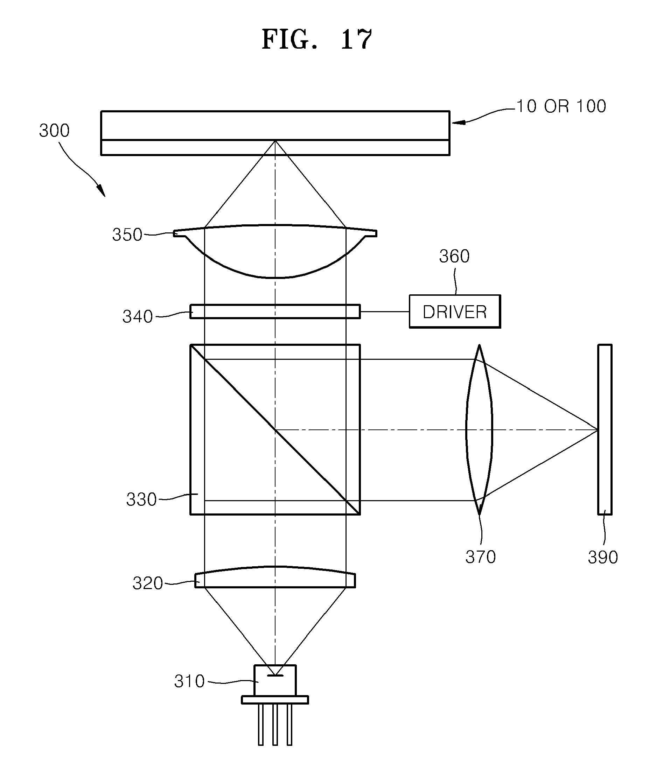

FIG. 15 illustrates an apparatus for recording and/or reproducing information on/from an information storage medium 10, 100, according to an example embodiment. FIGs. 16 and 17 schematically illustrate main optical constituents of an optical pickup 300 applicable to the apparatus for recording and/or reproducing information shown in FIG. 15, according to an example embodiment.

Referring to FIG. 15, the apparatus includes a spindle motor 312 rotating the information storage medium 10, 100, the optical pickup 300 installed to move in a radial direction of the information storage medium 10, 100 and recording or reproducing information on/from the information storage medium 10, 100, a driving unit 307 driving the spindle motor 312 and the optical pickup 300, and a controller 309 controlling a focus, a track servo, etc., of the optical pickup 300. The apparatus also includes a turn table 352 and a clamp 353 for chucking the information storage medium 10, 100.

The optical pickup 300 irradiates light by changing the polarization on the information storage medium 10, 100 and detects light reproduced in the information storage medium 10, 100.

Referring to FIG. 16, the optical pickup 300 may include a light source 310, an objective lens 350 focusing incident light on the information storage medium 10, 100, a photo detector 390 detecting an optical signal reproduced in the information storage medium 10, 100, and a polarization adjuster 340 controlling a polarization direction of light irradiated onto the information storage medium 10, 100.

The information storage medium 10, 100 is suitable for the structure shown in FIGs. 7A and 12A. In the optical pickup 300, an optical detector 390 that detects light transmitting through the information storage medium 10, 100 is disposed on the opposite side of the objective lens 350.

Referring to FIG. 17, the optical pickup 300 may include the light source 310, an optical path changer 330 changing a travel path of incident light, the objective lens 350 focusing the incident light onto the information storage medium 10, 100, the photo detector 390 detecting an optical signal reproduced in the information storage medium 10, 100, and the polarization adjuster 340 controlling a polarization direction of light irradiated onto the information storage medium 10, 100.

The information storage medium 10, 100 is suitable for the structure shown in FIGs. 7B and 12B. The photo detector 390 is disposed to detect light reflected by the reflection layer 130 of the information storage medium 10, 100. When the structure of the information storage medium 10, 100 is the same as shown in FIGs. 7B and 12B, the optical path changer 330 is required to allow the light emitted from the light source 310 to travel forward the information storage medium 10, 100 and allow the light reflected in the information storage medium 10, 100 to travel forward to the optical detector 390.

The most basic optical system shown in FIGs. 16 and 17 is used to record or reproduce information on/from the information storage medium 10, 100 according to the example embodiments described with reference to FIGs. 7A, 7B, 12A, and 12B and the whole optical system may have various modifications.

The light source 310 may emit a laser beam. That is, the light source 310 may be a semiconductor laser configured to emit a laser beam having a specific wavelength that can be absorbed by nanorods having a single aspect ratio.

The light source 310 may be a semiconductor laser for emitting a laser beam having a plurality of wavelengths that can be absorbed by nanorods having a plurality of types of aspect ratios. For example, the light source 310 may be a combination of a plurality of semiconductor laser elements emitting a laser beam having different wavelengths or be a semiconductor laser emitting a plurality of wavelengths so as to independently emit the laser beam having multiple wavelengths. In this regard, instead of a single package of the light source 310, the optical pickup 300 may include a plurality of semiconductor lasers for emitting laser light of a plurality of wavelengths that can be absorbed by nanorods having a plurality of types of aspect ratios.

The optical pickup 300 may further include a collimating lens 320 for collimating light emitted from the light source 310 on an optical path between the light source 310 an the objective lens 350 to form an infinite optical system. The optical pickup 300 may further include a detection lens 370 collecting a predetermined size of light that transmits through the information storage medium 10, 100 or is reflected in the information storage medium 10, 100 and travels to the photo detector 390.

The polarization adjuster 340 changes the polarization of light irradiated on the information storage medium 10, 100 to be suitable for a nanorod alignment layer having a single nanorod alignment direction on which information is to be recorded or reproduced or any one of a plurality of nanorod alignment directions of a single nanorod alignment layer. For example, the polarization adjuster 340 includes a half-wave plate. The optical pickup 300 may further include a driver 360 that rotates and drives the polarization adjuster 340 including the half-wave plate. If a rotational angle of the half-wave plate is adjusted, light transmitting through the half-wave plate may have a desired linear polarization direction.

The light transmitted through or reflected from the information storage medium 10, 100 is detected through the photo detector 390 disposed in the optical pickup 300, is optic-electric converted, and is converted into an electrical signal, and is operated in a signal detection circuit (not shown). A signal output by the signal detection circuit is input into the controller 309 through the driving unit 307. The driving unit 307 controls a rotational speed of the spindle motor 312, amplifies the input signal, and drives the optical pickup 300. The controller 309 sends, to the driving unit 307, a focus servo command and a tracking servo command adjusted based on the signal input to the driving unit 309 so as to realize a focusing and tracking operation of the optical pickup 300.

The number of effective recording layers may be determined by the number of polarization directivities and/or the number of aspect ratios of the nanorods. As such, the total number of effective recording layers may be a product of the number of polarization directivities and the number of aspect ratios of the nanorod. This may allow a single physical recording/reproduction layer to have multiple effective recording/reproduction layers. A recording and/or reproduction device may record information on or reproduce (e.g., read) information from a storage medium 10, 100 having single physical layer, but the effective storage capacity may be equivalent to that of a storage medium having multiple layers. Such a recording/reproduction device may have the capability of irradiating light at different polarizations and/or different wavelengths. The type of storage medium 10, 100 may be determined by the recording/reproduction device by, e.g., accessing type information stored on the storage medium 10, 100, accessing a code or other identification data on the storage medium 10, 100, referring to a lookup table or other driver data stored in the recording/reproduction device, or other method of determining the polarization(s) and/or wavelength(s) may be used with the storage medium 10, 100.

It is possible to avoid using a space layer 25 between each nanorod alignment layer 20, 120. Therefore, where there is more than one nanorod alignment layer 20, 120, each nanorod alignment layer 20, 120 may be on contact with at least one other nanorod alignment layer 20, 120 without a space layer 25 being disposed in between.

The processes, functions, methods and/or software described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An information storage medium in which repetitive recording is performed by using nanorods formed of a material capable of repeatedly changing light absorption.

2. The information storage medium of claim 1, wherein the nanorods are formed of a phase change material and information is recorded by a difference in the light absorption in an amorphous state and a crystalline state.

3. The information storage medium of claim 2, wherein aspect ratios of the nanorods remain constant, irrespective of the amorphous state and the crystalline state.

4. The information storage medium of claim 2, wherein the nanorods are formed of a chalcogenide material.

5. The information storage medium of claim 1, comprising: at least one nanorod alignment layer in which the nanorods are aligned, wherein:
the at least one nanorod alignment layer comprises a plurality of nanorod alignment layers; and
wherein the plurality of nanorod alignment layers have different nanorod alignment directions so that the information is recorded or reproduced by using light of different polarizations having a polarization direction in parallel to a nanorod alignment direction of each of the plurality of nanorod alignment layers.

6. The information storage medium of claim 5, wherein:
the nanorods having a single type of aspect ratio are aligned in each of the plurality of nanorod alignment layers and the information is recorded or reproduced by using light of a single wavelength; or
the nanorods having a plurality of types of aspect ratios are aligned in each of the plurality of nanorod alignment layers and the information is recorded or reproduced by using light of a plurality of wavelengths.

7. The information storage medium of claim 5, wherein the plurality of nanorod alignment layers are disposed in an effective focal depth of a light beam focused by an objective lens so that the information is recorded or reproduced on/from the plurality of nanorod alignment layers by adjusting a polarization direction of incident light without movement of the objective lens.

8. The information storage medium of claim 7, wherein a separate space layer is not disposed between the nanorod alignment layers adjacent to the plurality of nanorod alignment layers.

9. The information storage medium of claim 7, wherein:
the plurality of nanorod alignment layers are repeatedly stacked; and
a space layer is disposed between the plurality of stacked nanorod alignment layers.

10. The information storage medium of claim 9, wherein:
the plurality of nanorod alignment layers of each stack are disposed in the effective focal depth of the light beam focused by the objective lens so that the information is recorded on or reproduced from the plurality of nanorod alignment layers of a stack by adjusting a polarization direction of incident light without movement of the objective lens; and
when there is a change in the stacks including the plurality of nanorod alignment layers on which the information is to be recorded or reproduced, in a state where a light beam is focused onto a stack including a nanorod alignment layer on which the information is to be recorded or reproduced, the information is recorded on or reproduced from the nanorod alignment layer of the corresponding stack.

11. The information storage medium of claim 9, wherein, when the information is recorded on or reproduced from the plurality of nanorod alignment layers of a stack, the space layer is used to secure a distance between stacks in order to prevent recording or reproduction of information on the plurality of nanorod alignment layers of stacks adjacent to the stack.

12. The information storage medium of claim 1, comprising: at least one nanorod alignment layer in which the nanorods are aligned, wherein:
the at least one nanorod alignment layer comprises a single nanorod alignment layer; and
either:
nanorods having a single type of aspect ratio are aligned in the single nanorod alignment layer and the information is recorded or reproduced by using light of a single wavelength; or
nanorods having a plurality of types of aspect ratios are aligned in the single nanorod alignment layer and multiple wavelength information is recorded or reproduced by using light of a wavelength corresponding to each of the plurality of types of aspect ratios.

13. The information storage medium of claim 12, wherein nanorods are aligned in a plurality of nanorod alignment directions in the single nanorod alignment layer so that multiple polarization information is recorded or reproduced by using light having a polarization direction in parallel to each of the plurality of nanorod alignment directions.

14. The information storage medium of claim 12, wherein a single nanorod alignment layer is repeatedly stacked, wherein:
a space layer is disposed between the repeatedly stacked single nanorod alignment layer; and
when the information is recorded on or reproduced from one of the repeatedly stacked single nanorod alignment layers, the space layer is used to secure a distance between the one of the repeatedly stacked single nanorod alignment layers and any of the repeatedly stacked nanorod alignment layers adjacent to the one of the repeatedly stacked single nanorod alignment layers in order to prevent recording of information on or reproduction of information from any of the repeatedly stacked single nanorod alignment layers adjacent to the one of the repeatedly stacked single nanorod alignment layers.

15. A recording and/or reproducing apparatus, comprising:
an optical pickup changing polarization or wavelength;
irradiating light onto the information storage medium; and
detecting light reproduced from the information storage medium in order to record information onto the information storage medium of any one of claims 1 through 14 and/or reproduce the information recorded onto the information storage medium.
